# EUROPÄISCHE PATENTSCHRIFT

(11) **EP 4 034 949 B1**
(45) Veröffentlichungstag und Bekanntmachung des Hinweises auf die Patenterteilung: **08.11.2023**
(21) Anmeldenummer: 20776141.2
(22) Anmeldetag: 22.09.2020
(51) Int. Cl.: G05B 19/042, G06F 11/07, G06F 11/14

(54) **PROGRAMMIERBARER ELEKTRONISCHER LEISTUNGSSTELLER**
PROGRAMMABLE POWER MODULE
MODULE DE PUISSANCE PROGRAMMABLE

(30) Priorität: 25.09.2019 DE 102019125867
(43) Veröffentlichungstag der Anmeldung: 03.08.2022
(73) Patentinhaber: KEBA Industrial Automation Germany GmbH, 35633 Lahnau (DE)
(72) Erfinder: WERTZ, Harald, 59494 Soest (DE); TIEN, Patrick, 59425 Unna (DE); HERRMANN, Gerald, 58730 Fröndenberg (DE); BACH-PRECKWINKEL, Heiko, 44309 Dortmund (DE)
(74) Vertreter: Keil & Schaafhausen Patentanwälte PartGmbB
(86) Internationale Anmeldenummer: PCT/EP2020/076412
(87) Internationale Veröffentlichungsnummer: WO 2021/058471

(56) Entgegenhaltungen:
- DE-A1-102015 003 194
- US-A1- 2013 231 767

## Beschreibung

Die Erfindung betrifft einen programmierbaren elektronischen Leistungssteller mit einem Leistungsmodul zum Ansteuern mindestens eines an das Leistungsmodul anschließbaren bzw. angeschlossenen, insbesondere elektromechanischen Aktuators mittels eines Aktuator-Stellsignals, bspw. in Form einer angelegten Spannung oder eines geeignet gewählten Stroms. Die Spannung respektive der Strom können durch eine geeignete Energieversorgung zur Verfügung gestellt und in dem Leistungsmodul des Leistungsstellers entsprechend eingestellt werden, bspw. mittels eines Thyristorstellers, eines Transformators, eines Wechselrichters, eines Pulsweitenmodulators oder dgl. elektronischen Gerät, mit dem die Ausgangsleistung bzw. der Ausgangsstrom und/oder die Ausgangsspannung variabel einstellbar sind.

Der Leistungssteller weist ferner ein Steuerungsmodul zum Betätigen bzw. Ansteuern des Leistungsmoduls mittels eines Leistungsmodul-Ansteuersignals und ein internes Überwachungsmodul zum Überführen des Steuerungsmoduls in einen Notbetrieb auf. In dem Notbetrieb ist das Steuerungsmodul dazu eingerichtet, eine vordefinierte Fehlerreaktion auszuführen und den Aktuator in einen sicheren Zustand zu versetzen, wobei das interne Überwachungsmodul dazu eingerichtet ist, einen Systemzustand zu überwachen, einen kritischen Betriebszustand zu erkennen und im Falle eines erkannten kritischen Betriebszustands mindestens ein Fehlersignal auszugeben, das insbesondere das Steuerungsmodul respektive den Leistungssteller in den Notbetrieb versetzt.

Derartige programmierbare Leistungssteller werden häufig bei Systemen eingesetzt, in denen das bloße Abschalten eines oder mehrerer elektromechanischer Aktuatoren im Fehlerfall (d.h. einem kritischen Betriebszustand) gefährlich ist oder sein kann, weil es zumindest eine kritische Betriebsphase des Systems gibt, in der durch das einfache Abschalten der Aktuatoren ein oder mehrere Sicherheitsziele für das System verletzt würden. Ein häufiger, erfindungsgemäß bevorzugter Anwendungsfall ist ein Pitchsystem einer Windkraftanlage, mit dem die Drehstellung mindestens eines Rotorblatts an der Rotornabe eingestellt wird. Andere sinnvolle Anwendungsgebiete können kritische Produktionsprozesse oder elektrisch angetriebene Fahrzeuge sein. In solchen Systemen müssen Fehlertoleranzmaßnahmen vorgesehen werden, die im Fehlerfall zumindest einen Notbetrieb des Systems ermöglichen ("Fail-Operational-System").

In geregelten elektromechanischen Aktuatoren werden fast immer programmierbare elektronische Leistungssteller (PEL) eingesetzt. Diese enthalten neben den eigentlichen Basisfunktionen zur Regelung des Aktuators zahlreiche Zusatzfunktionen, etwa zum Einlesen von externen Sensoren, zur Generierung von kinematischen Bewegungsprofilen und zur Echtzeit-Kommunikation mit anderen Systemen über komplexe Kommunikationsschnittstellen. Weitere Zusatzfunktionen ermöglichen bspw. die komfortable Diagnose, Parametrierung, Anwenderprogrammierung und Inbetriebnahme der programmierbaren elektronischen Leistungssteller. Die Komplexität solcher programmierbarer Leistungssteller birgt signifikante Risiken für unentdeckte, systematische Softwarefehler.

Softwarefehler in den komplexen Zusatzfunktionen können den zuverlässigen Übergang des Leistungsstellers vom Normalbetrieb in den Notbetrieb verhindern, bspw. wenn die Software bei der Abarbeitung hängen bleibt oder bspw. in einer Endlosschleife eine hohe Prozessorleistung verbraucht. Bei der Verwendung von mehreren gleichartigen komplexen Leistungsstellern in einem System besteht damit ein hohes Risiko für systemkritische "common cause" Fehler. Eine hinreichende Minimierung der Auftrittswahrscheinlichkeit dieser common cause Fehler durch fehlervermeidende Maßnahmen während der Produktentwicklung ist bei komplexen Systemen - und sei es aus Kostengründen - in der Regel nicht in ausreichendem Maße möglich.

Die Integration von funktionaler Sicherheit bei der Ansteuerung elektromechanische Aktuatoren, z.B. in den elektrischen Antriebssystemen, ist seit mehreren Jahren bekannt und in der industriellen Praxis eingeführt. Der sichere Zustand des Aktuators ist in der Regel der Stillstand mit sicherer Abschaltung von Drehmoment- bzw. Kraftbildung und einer sicheren Bremsenansteuerung. Auch Sicherheitsfunktionen, die bei laufender Bewegung angefordert werden können, wie z.B. ein sicher begrenztes Drehmoment, eine sicher begrenzte Drehzahl oder ein sicher begrenzter Positionsbereich, beinhalten nach Aufdeckung einer Fehlfunktion als sichere Fehlerreaktion immer das Stillsetzen mit anschließender Abschaltung des Drehmoments bzw. der Kraft.

Eine komplexe Fehlerreaktion kann insbesondere das Erreichen einer sicheren Position in einer vorgegebenen Zeit sein. Ein Beispiel hierfür ist bspw. ein Pitch-Antrieb zur Verstellung des Rotorblattwinkels einer Windenergieanlage. Je nach Anwendungsfall können weitere mögliche Fehlerreaktionen die Aufrechterhaltung einer Antriebsdrehzahl oder die Reduzierung / Erhöhung einer Antriebsdrehzahl nach einer vorgegebenen Beschleunigungs- oder Bremsrampe bis zu einem vorgegebenen Zielwert sein.

Voraussetzung für das Durchführen einer komplexen Fehlerfunktion ist, dass trotz des kritischen Betriebszustands diese Fehlerreaktion durch das Steuerungsmodul des Leistungsstellers noch zuverlässig angesteuert werden kann. Dies ist jedoch nicht möglich, wenn das Steuerungsmodul selbst, bspw. aufgrund von Softwarefehlern in aufwendigen Zusatzfunktionen, nicht mehr ordnungsgemäß funktioniert und bspw. die gesamte Prozessorleistung durch Ausführung einer - sicherheitstechnisch nicht wichtigen - Zusatzfunktion verbraucht wird.

In der DE 10 2012 012 521 A1 wird eine programmierbare Steuerung für sicherheitskritische Anwendungen in einer Maschinenumgebung beschrieben. Es ist vorgesehen, dass die Funktion von sicherheitsrelevanten Programmkomponenten nicht durch Fehler oder Abläufe von anderen Programmkomponenten beeinflusst wird. Zur Ablaufsteuerung von Anwendungsprogrammen können unterschiedliche Kriterien herangezogen werden, beispielsweise kann die Ablaufsteuerung auf Basis eines Laufzeitsystems in Verbindung mit einem Betriebssystem erfolgen. Es erfolgt ein paralleler und unabhängiger Betrieb eines normalen und eines sicheren Programms auf Basis einer Laufzeitsystemstruktur, wobei vorgeschlagen wird, alle für die Steuerung relevanten Komponenten auf einer Hardwarekomponente mit einer spezifischen Hardwarearchitektur zu integrieren und mittels einer mindestens dual ausgebildeten Laufzeitsystemstruktur für zwei Laufzeitsysteme voneinander zu trennen, um Änderungen an nicht sicherheitsrelevanten Komponenten frei vornehmen zu können. Die Trennung kann insbesondere durch eine Priorisierung eines der Laufzeitsysteme erfolgen.

Aus der DE 10 2005 007 477 A1 ist eine programmierbare Steuerung zur Maschinen- und/oder Anlagenautomatisierung mit einer Standard-Steuerung mit Standard-Steuerungsfunktionen und einer Sicherheits-Steuerung mit Sicherheitsfunktionen auf Basis eines PC bekannt. Die Sicherheits-Steuerung besteht aus einem oder mehreren mit dem PC-Bus verbundenen Sicherheits-Modulen, und in den Sicherheits-Modulen ist eine sicherheitszertifizierte Firmware vorgesehen. So bietet die Steuerung eine Trennung zwischen der nicht sicherheitsgerichteten Standardfunktion und der Sicherheitsfunktion durch modulare Aufteilung innerhalb des Steuergerätes. Die Standardfunktion unterliegt bei dieser Aufteilung keinen sicherheitstechnisch begründeten Restriktionen und kann entsprechend komplex realisiert sein.

DIE US 2013/231767 A1 beschreibt ein Multi-Chip-Modul, das einen ersten Chip mit einem Steuerprozessor zur Erzeugung eines Signals zur Steuerung eines industriellen Prozesses und eine Eingangs-/Ausgangsschnittstelle enthält. Das Multi-Chip-Modul umfasst auch einen zweiten Chip mit einem Überwachungsprozessor und einer Eingangs-/Ausgangsschnittstelle. Ein Prozessorausfall des Steuerprozessors oder des Überwachungsprozessors wird von dem jeweils anderen Prozessor erkannt. Der Prozessor, der den Ausfall erkennt, ist so konfiguriert, dass er über seine Eingangs-/Ausgangsschnittstelle ein Signal ausgibt, um den industriellen Prozess als Reaktion auf den Ausfall in einen sicheren Zustand übergehen zu lassen.

Aufgabe der Erfindung ist es vor diesem Hintergrund, einen programmierbaren elektronischen Leistungsteller vorzusehen, mit dem auch in einem kritischen Betriebszustand noch komplexe Fehlerreaktionen durch das Steuerungsmodul zuverlässig abgearbeitet werden, um das System definiert in einen sicheren Stillstand zu überführen.

Diese Aufgabe wird mit einem programmierbaren elektronischen Leistungssteller der eingangs genannten Art insbesondere dadurch gelöst, dass das Steuerungsmodul des programmierbaren elektronischen Leistungsstellers eine Basissteuerung, eine Zusatzsteuerung und eine Steuerungstrennstelle aufweist. Insbesondere kann das Steuerungsmodul aus diesen drei Bestandsteilen bestehen.

Die Basissteuerung ist dazu eingerichtet, die Leistungsmodul-Ansteuersignale auszugeben. Ferner sind in der Basissteuerung die bzw. vorzugsweise alle Funktionen zur autarken Steuerung und Regelung des Aktuators implementiert, die für einen Notbetrieb in einem kritischen Betriebszustand notwendig sind. Damit ist die Basissteuerung derjenige Teil des Steuerungsmoduls, das den Aktuator ansteuert (d.h. das Leistungsmodul-Ansteuersignale ausgibt). Das Leistungsmodul stellt sodann die für den Aktuator benötigte Leistung in Form eines Aktuator-Stellsignals zur Verfügung. Das Aktuator-Stellsignal kann insbesondere ein Strom- und/oder Spannungssignal sein, mit dem der Aktuator, bspw. ein Drehstrommotor, versorgt wird.

Die zur autarken Steuerung und Regelung des Aktuators implementierten Funktionen umfassen insbesondere Anweisungen zur Umsetzung von (logischen) Stellbefehlen aus einer Steuerung und/oder Regelung in (maschinennahe) Leistungsmodul-Ansteuersignale sowie die Steuer- und Regelalgorithmen für den Aktuator sowie ggf. eine dafür benötigte Sensorik.

Im Falle eines Pitch-Antriebs einer Windkraftanlage zur Drehverstellung eines der Rotorblätter an einer Rotornabe als einen bevorzugten Anwendungsfall kann der elektromechanische Aktuator insbesondere ein Drehstromantrieb (Drehstrommotor) sein. In diesem Fall umfasst die Basissteuerung für die autarke Steuerung und Regelung des Drehstromantriebs insbesondere eine Messwerterfassung, ein Feldmodell (das bspw. der Zustandsbeschreibung des Aktuators oder des durch den Aktuator gesteuerten Systems meist auf Grundlage der erfassten Messwerte dient), eine Stromregelung, eine Modulation, eine Drehzahlregelung.

In der Zusatzsteuerung sind für den Notbetrieb in einem kritischen Betriebszustand nicht benötigte Funktionen implementiert. Dazu können Funktionen zählen wie Auswertung von externen Sensoren, Generierung von kinematischen Bewegungsprofilen oder Echtzeit-Kommunikation mit externen Systemen über (teils komplexe) Kommunikationsschnittstellen. Derartige Funktionen sind insbesondere für eine Optimierung des Betriebs des durch den Aktuator angesteuerten Systems sinnvoll und wünschenswert, ohne allerdings sicherheitsrelevant zu sein. Weitere Zusatzfunktionen ermöglichen bspw. eine komfortable Diagnose, Parametrierung, Anwenderprogrammierung und Inbetriebnahme des programmierbaren elektronischen Leistungsstellers und führen zu einer Vereinfachung bei Instandhaltung und Wartung.

Als optionales Element kann der vorgeschlagene elektronische Leistungssteller daher erfindungsgemäß über eine Schnittstelle der Zusatzsteuerung mit einer externen Steuerung verbunden bzw. verbindbar sein. Die Zusatzsteuerung kann erfindungsgemäß dazu eingerichtet sein, Betriebsdaten von der Zusatzsteuerung an die externe Steuerung zu versenden und/oder Steuerungsdaten von der externen Steuerung zu empfangen.

Die erfindungsgemäß vorgesehene Steuerungstrennstelle verbindet die Basissteuerung mit der Zusatzsteuerung über eine Steuerverbindung, die sowohl eine Steuerbindung von der Basissteuerung zu der Zusatzsteuerung als auch eine Steuerverbindung von der Zusatzsteuerung zur der Basissteuerung umfassen kann. Die Steuerverbindung erlaubt im Normalbetrieb eine gemeinsame Nutzung der Basissteuerung und der Zusatzsteuerung, die miteinander Daten austauschen können. Somit können im Normalbetrieb sowohl die Funktionen ausgeführt werden, die (auch) im Notbetrieb benötigt und in der Basissteuerung umgesetzt werden, als auch die Funktionen, die nur im Normalbetrieb ausgeführt werden können und in der Zusatzsteuerung umgesetzt werden.

Für den Fehlerfall, d.h. bei Erkennen eines kritischen Betriebszustands durch das interne Überwachungsmodul, ist die Steuerungstrennstelle dazu eingerichtet, das Fehlersignal von dem internen Überwachungssignal zu erhalten und nach dessen Erhalt die Steuerverbindung zumindest teilweise zu trennen, etwa in eine Verbindungsrichtung der Steuerverbindung von der Basissteuerung zu der Zusatzsteuerung oder in eine zweite Verbindungsrichtung der Steuerverbindung von der Zusatzsteuerung zu der Basissteuerung, vorzugsweise aber vollständig in beide Verbindungsrichtungen. Mit anderen Worten ist das Überwachungsmodul erfindungsgemäß dazu eingerichtet, im Notbetrieb eine funktionale Trennung der Basissteuerung von der Zusatzsteuerung vorzunehmen, so dass eine externe Beeinflussung der Basissteuerung durch die Zusatzsteuerung ausgeschlossen werden kann.

Mit dem erfindungsgemäßen programmierbaren elektronischen Leistungssteller kann also ein auch erfindungsgemäßes Verfahren umgesetzt werden, mit dem eine sichere Aktuator-Steuerung in dem Steuerungsmodul realisiert wird, bei dem nach Aufdeckung einer Fehlfunktion in einen Notbetrieb mit einem reduzierten Funktionsumfang umgeschaltet wird, in dem die Basissteuerung ohne Beeinflussung und/oder Zugriff durch eine Zusatzsteuerung autark eine komplexe Fehlerreaktion ausführt, bevor ein sicheres Stillsetzen des Aktuators wie im Stand der Technik üblich erfolgt. Erfindungsgemäß kann im Notbetrieb insbesondere auf das Ausführen einer Fehlerauswertung in der Software verzichtet werden. Eine solche Fehlerauswertung ist in der Regel aufwendig und dient insbesondere dem systematischen Aufdecken und Anzeigen von Fehlfunktionen, bevor ein kritischer Betriebszustand erreicht wird. So besteht die Möglichkeit, systematische Fehler durch Softwareupdates zu korrigieren und/oder dem Entstehen eines kritischen Betriebszustands im Vorfeld entgegenzuwirken. Nach dem Erreichen des kritischen Betriebszustands steht das Ausführen einer komplexen Fehlerfunktion im Vordergrund. Daher kann eine (umfassende) Fehlerauswertung erfindungsgemäß in der Zusatzsteuerung implementiert sein und somit im Notbetrieb nicht zur Verfügung stehen.

Im Rahmen der Erfindung wurde erkannt, dass die Probleme im Notbetrieb insbesondere dann auftreten, wenn die Softwareteile für Basisfunktionen und Zusatzfunktionen auf demselben Mikrocontroller mit gemeinsam genutzten Ressourcen (CPU, Peripherie, Speicher) ausgeführt werden. Zur Vermeidung dieses Problems wurden die verschiedenen Teile der Steuerung in eine - in sich autarke - Basissteuerung und eine Zusatzsteuerung aufgeteilt, wobei eine zuverlässige Steuerungstrennstelle vorgesehen ist, um die beiden Teilsteuerungen zuverlässig voneinander zu separieren, insbesondere in einem kritischen Fehlerfall. Die in dieser Erfindung beschriebene Lösung realisiert den Notbetrieb mit reduziertem Funktionsumfang also durch Auftrennung der komplexen Steuerungshardware und -software in eine Basissteuerung und eine Zusatzsteuerung durch ein unabhängiges Überwachungsmodul. Die Basissteuerung enthält ausschließlich die für den reduzierten Funktionsumfang des Notbetriebs benötigten Hardware- und Softwarekomponenten, die insgesamt eine deutlich geringere Komplexität beinhalten als die der Zusatzsteuerung. Dies hat den Vorteil, dass sich die sicherheitstechnische Bewertung der Software der Aktuator-Steuerung (d.h. des Steuerungsmoduls) auf die Software der Basissteuerung beschränken kann und damit deutlich einfacher ist als die Bewertung der kompletten Steuerungssoftware.

Das Trennen von Basissteuerung und Zusatzsteuerung kann in einer einfachen Ausgestaltung dadurch realisiert werden, dass zwischen den beiden Steuerungen eine vorzugsweise bidirektionale Schnittstelle realisiert ist, die eine Steuerverbindung (im Sinne einer Kommunikationsverbindung) zwischen den beiden Steuerungen ermöglicht, so dass Daten zwischen den beiden Steuerungen ausgetauscht werden können. In einem solchen Fall lässt sich das Trennen der Basissteuerung von der Zusatzsteuerung durch ein Unterbrechen der Kommunikationsschnittstelle realisieren.

In einer weiteren Ausführungsform, die alternativ oder zusätzlich realisiert sein kann, kann die Steuerungstrennstelle als Speicherschutzeinrichtung realisiert sein, welche dazu eingerichtet ist, festgelegte Speicherbereiche der Basissteuerung vor einer Beeinflussung durch die Zusatzsteuerung zu schützen. Dazu kann bspw. eine Zugriffsbeschränkung (bspw. eine Schreibbeschränkung, ggf. sogar in Verbindung mit einer Lesebeschränkung) für Zugriffe auf Speicherbereiche der Basissteuerung erfolgen. Auch hierdurch wird verhindert, dass ein softwaretechnisches Problem in der Zusatzsteuerung Auswirkungen auf die Basissteuerung hat. Dies wird auch als Trennen der Steuerverbindung zwischen Basissteuerung und Zusatzsteuerung verstanden.

In einer weiteren, alternativ oder zusätzlich realisierbaren Ausführungsform kann die Steuerungstrennstelle dazu eingerichtet sein, die Zusatzsteuerung bei Erhalt des Fehlersignals von dem internen Überwachungsmodul in einen Resetzustand zu versetzen und zu halten, bis der Notbetrieb beendet wird. Im Resetzustand entfaltet die Zusatzsteuerung keine Wirkung in dem Leistungssteller, so dass keine Beeinflussung der Basissteuerung durch die Zusatzsteuerung möglich ist. Auch hierdurch wird die Steuerverbindung zwischen Basissteuerung und Zusatzsteuerung getrennt.

Gemäß einer bevorzugten Ausgestaltung des erfindungsgemäß vorgeschlagenen Leistungsstellers kann das Steuerungsmodul mehrere Prozessoren aufweisen, wobei die Basissteuerung und die Zusatzsteuerung auf jeweils unterschiedlichen Prozessoren implementiert sind. Sowohl für die Basissteuerung als auch für die Zusatzsteuerung ist also jeweils mindestens ein eigener Prozessor vorgesehen. Somit kann die Trennung von Basissteuerung und Zusatzsteuerung auch hardwareseitig realisiert werden. Ggf. kann im Notfallbetrieb der Prozessor mit der Zusatzsteuerung heruntergefahren oder deaktiviert werden, um jeglichen Einfluss durch die Zusatzsteuerung auf die Ausführung der komplexen Fehlerreaktionen zu vermeiden und die Steuerverbindung zwischen Basissteuerung und Zusatzsteuerung auf diese Weise zu trennen.

In einer ähnlichen Ausführungsform der Erfindung kann das Steuerungsmodul einen Multi-Kern-Prozessor aufweisen, wobei die Basissteuerung und die Zusatzsteuerung auf jeweils mindestens einem unterschiedlichen Kern des Multi-Kern-Prozessors implementiert sind. Auch hierdurch wird hardwareseitig eine Trennung der Steuerverbindung zwischen Basissteuerung und Zusatzsteuerung erreicht.

Als weiteres Sicherheitsmerkmal kann das Leistungsmodul erfindungsgemäß eine Leistungsmodultrennstelle aufweisen, welche zwischen dem Leistungsmodul und einem Anschluss an den Aktuator angeordnet und dazu eingerichtet ist, das Fehlersignal von dem internen Überwachungsmodul zu erhalten und nach dessen Erhalt das Aktuator-Stellsignal nicht an den Anschluss des Aktuators (gleichbedeutend mit: nicht an den Aktuator oder mehrere Aktuatoren) weiterzuleiten. Dies entspricht etwa einer Notaus-Funktion, die den Anschluss an den Aktuator strom- und spannungslos schaltet, d.h. den Aktuator instantan stillsetzt. In diesem Fall kann die erfindungsgemäß komplexe Fehlerreaktion nicht mehr ausgeführt werden. Ein solcher Fall kann eventuell nach Ausfall von kritischen Hardwarekomponenten auftreten, die einen Notbetrieb des Leistungsstellers nicht mehr erlauben. In diesem Fall kann es sinnvoll sein, elektromechanische Aktuatoren unmittelbar stillzusetzen.

Das interne Überwachungsmodul kann in diesem Fall (quasi als zweite Rückfallebene der Fehlerbehandlung) also durch Aktivierung der Leistungsmodultrennstelle mittels eines Fehlersignals an die Leistungsmodultrennstelle eine oder ggf. mehrere extern angeschlossene Komponenten von dem Leistungssteller trennen. So kann ein Leistungsfluss zwischen extern angeschlossenen Komponenten und dem Leistungssteller verhindert werden. Die mehreren Komponenten können ggf. unterschiedliche Aktuatoren sein, die unterschiedliche Stellvorgänge ausführen und durch den Leistungssteller separat oder gemeinsam ansprechbar sind. Mögliche Aktuatoren können Motoren, eine Betriebs-Haltebremse oder andere elektrisch betriebene Geräte sein. Eine Betriebs-Haltebremse kann bspw. so realisiert sein, dass diese eine Energieversorgung benötigt, um die Bremse zu öffnen, und bei Wegfall der Energieversorgung die Bremse schließt.

Andere an das Leistungsmodul angeschlossene Komponenten können eine Energieversorgung sein, bspw. eine Netzversorgung oder ein Energiespeicher. Das Aktivieren der Leistungsmodultrennstelle kann vorzugsweise auch die Energieversorgung von dem Leistungsmodul des Leistungsstellers trennen und damit sämtliche angeschlossene Aktuatoren stillsetzen.

Die Trennung der einzelnen Komponenten kann selektiv, in Gruppen oder gemeinsam erfolgen.

In einer besonders bevorzugten Ausführungsform der Erfindung kann an das interne Überwachungsmodul ein interner Signalgeber, ein externer Signalgeber und/oder ein externes Überwachungsmodul angeschlossen sein, wobei der interne Signalgeber, der externer Signalgeber und/oder das externe Überwachungsmodul dazu eingerichtet sind, Datensignale an das interne Überwachungsmodul zu senden. Der interne und der externe Signalgeber können bspw. Messwertgeber mit Sensoren sein, die als Datensignal die Sensorsignale und/oder aus den Sensorsignalen abgeleitete Sensorwerte übermitteln. Das externe Überwachungsmodul kann ein eigenständiges Sicherheitsmodul zur Erkennung von Fehler- oder Gefahrensituationen sein, das autark gesammelte Informationen (Messwerte, Zustandswerte oder sonstige Daten) sammelt und bewertet. Als Datensignal kann dann bspw. ein Fehlersignal an das interne Überwachungsmodul gesendet werden. Dieses Fehlersignal kann als Anforderungssignal an das interne Überwachungsmodul verstanden werden, den programmierbaren elektronische Leistungssteller in einen Notbetrieb zu überführen, in dem erfindungsgemäß die Basissteuerung von der Zusatzsteuerung getrennt wird (Ausführen einer komplexen Fehlerreaktion) und/oder das Leistungsmodul von angeschlossenen Aktuatoren, der Energieversorgung und/oder anderen angeschlossenen Leistungskomponenten zu trennen (Stillsetzen der Komponente, insbesondere im Sinne eines Notaus).

Ferner kann die Basissteuerung direkt an das interne Überwachungsmodul angeschlossen sein und Datensignale an das interne Überwachungsmodul senden. Eine Möglichkeit für ein solches Datensignal stellt ein Fehlersignal dar. Auch dieses Fehlersignal kann als Anforderungssignal an das interne Überwachungsmodul verstanden werden, den programmierbaren elektronischen Leistungssteller in einen Notbetrieb zu überführen, bspw. wenn in der Basissteuerung ein Zustand der Basissteuerung und/oder (im Normalbetrieb auch) der Zusatzsteuerung erkannt wird, der kritisch ist und ggf. zu einem Ausfall von Basis- und/oder Zusatzsteuerung führen könnte.

In Reaktion auf die Bewertung kann, sofern das interne Überwachungsmodul eine kritische Betriebssituation erkennt, das interne Überwachungsmodul ein Fehlersignal oder mehrere Fehlersignale aussenden. Das Erkennen einer kritischen Betriebssituation kann bspw. durch Vergleich der empfangenen Datensignale mit zulässigen Bereichen ermittelt werden. Auch eine Kombination mehrerer Datenwerte ist möglich, ggf. über algebraische Regeln, Methoden der Fuzzy-Logik oder mittels Künstlicher Intelligenz (KI).

Dabei kann das interne Überwachungsmodul auch unterschiedliche Stufen von kritischen Betriebszuständen erkennen und, abhängig von der erkannten Stufe, unterschiedliche Fehlersignale aussenden. Verschiedene Möglichkeiten für Fehlersignale werden nachstehend erläutert. Alle diese Fehlersignale können einzeln oder in beliebiger Kombination ausgesendet werden, und zwar ggf. zusätzlich zu dem bereits beschriebenen Fehlersignal an die Steuerungstrennstelle.

In einer erfindungsgemäß vorteilhaften Ausführung kann das interne Überwachungsmodul dazu eingerichtet sein, ein Fehlersignal (Neustart-Fehlersignal) an die Basissteuerung auszusenden, wobei die Basissteuerung bei Erhalten dieses Fehlersignals dazu eingerichtet ist, einen Neustart der Basissteuerung auszulösen. Bei Ausfall des komplexen programmierbaren elektrischen Leistungsstellers während eines kritischen Systemzustands kann die Aktivierung des Notbetriebs also durch einen Software-Neustart der Aktuatorsteuerung erfolgen.

Gemäß einer bevorzugten Variante erfolgt der Neustart derart, dass das Steuerungsmodul nach dem Neustart durch das Neustart-Fehlersignal automatisch in einem Notbetrieb arbeitet, d.h. die Basissteuerung von der Zusatzsteuerung getrennt ist. Vorzugsweise kann bei dem Neustart die gesamte Steuerung heruntergefahren und nur die Basissteuerung gestartet werden. Hierdurch kann der Neustart so schnell durchgeführt werden, wie dies die Sicherheits-Reaktionszeit des Systems erfordert. Die Software arbeitet nach dem Neustart automatisch im Notbetrieb, in dem die nicht benötigten komplexen Zusatzfunktionen des programmierbaren elektrischen Leistungsstellers zuverlässig deaktiviert sind. Dadurch wird der potenziell gefährliche Einfluss von systematischen Software-Fehlern in den komplexen Zusatzfunktionen auf die Verfügbarkeit der für den Notbetrieb benötigten Basisfunktionen eliminiert. Die Zusatzsteuerung kann bspw. in dem bereits beschriebenen Resetzustand gehalten werden, bis die kritische Betriebssituation nicht mehr besteht.

Ein besonderer Vorteil dieser erfindungsgemäßen Variante liegt darin, dass die Basissteuerung nach dem Schnell-Neustart in einem definierten Betriebszustand arbeitet und anstehende komplexe Fehlerreaktionen zuverlässig ausgeführt werden können.

Gemäß einer weiteren Variante kann das interne Überwachungsmodul dazu eingerichtet sein, ein Fehlersignal an die Basissteuerung auszusenden, wobei die Basissteuerung bei Erhalten dieses Fehlersignals (Vorwarn-Fehlersignal) dazu eingerichtet ist, einen Notbetrieb vorzubereiten. Dieses Vorwarn-Fehlersignal kann durch das interne Überwachungsmodul sehr zeitig ausgesendet werden, bspw. wenn in dem internen Überwachungsmodul ein Hinweis auf einen möglichen kritischen Betriebszustand vorliegt, bspw. ohne dass dieser in dem internen Überwachungsmodul vollständig bestätigt ist. Ein solches Vorwarn-Fehlersignal kann bspw. in der Basissteuerung dazu verwendet werden, den Betriebszustand der Basissteuerung zu überprüfen, auf Anfrage der Zusatzsteuerung ausgeführte Funktionen abzubrechen und/oder ein Datensignal an das interne Überwachungsmodul zu senden, dass ein Neustart der Basissteuerung sinnvoll oder notwendig ist. Durch ein solches Vorwarn-Fehlersignal kann ein geordneter Übergang in den Notbetrieb eingeleitet werden.

Erfindungsgemäß kann ein weiteres Fehlersignal an das externe Überwachungsmodul gesendet werden, um das Eintreten eines kritischen Betriebszustandes bspw. an eine Leitstelle zur Alarmierung weiterzuleiten. Das externe Überwachungsmodul kann auch das oder die internen Überwachungsmodul eines oder mehrerer weiterer in der gleichen Anlage installierten programmierbaren elektrischen Leistungssteller sein. Hierdurch wird eine Vernetzung verschiedener Leistungssteller in derselben Anlage erreicht. Dies ist vorteilhaft, weil für einen anderen Leistungssteller erkannte kritische Betriebssituationen, insbesondere von sie von Umgebungseinflüssen herrühren, häufig auch für die anderen Leistungssteller derselben Anlage gelten. Dies ist durch eine derartige Vernetzung schnell anlagenweit erkennbar.

Zusätzlich zu dem Fehlersignal nach Eintreten des kritischen Betriebszustands respektive dem Einleiten des Notbetriebs kann auch ein vorbeschriebenes Vorwarn-Fehlersignal an das externe Überwachungsmodul ausgesendet werden.

In einer besonders bevorzugten Ausführungsform kann ausschließlich die Basissteuerung dazu eingerichtet sein, Leistungsmodul-Ansteuersignale an das Leistungsmodul auszugeben und/oder andere (wesentliche) Funktionen des Steuerungsmoduls auszuführen. Damit werden wesentliche Funktionen der Basissteuerung, insbesondere die mit der direkten Ansteuerung des Aktuators in Verbindung stehenden Funktionen, sowohl im Normalbetrieb (d.h. mit aktiver Basissteuerung und Zusatzsteuerung) als auch im Notbetrieb (d.h. mit nur aktiver Basissteuerung und deaktiver / deaktivierter Zusatzsteuerung) ausschließlich durch die Basissteuerung gesteuert. Es ist somit davon auszugehen, dass diese Funktionen dann auch im Notbetrieb fehlerfrei ausgeführt werden. Mit anderen Worten ist zumindest ein Großteil der im Notbetrieb benötigten Funktionen auch im Normalbetrieb ständig in Betrieb bzw. in Benutzung. Diese Funktionen können daher als betriebsbewährt angesehen werden.

Um einen Notbetrieb auch wieder aufzuheben, wenn bspw. kein kritischer Betriebszustand mehr besteht, kann die interne Überwachungseinrichtung erfindungsgemäß dazu eingerichtet sein, das Ende eines Notbetriebs zu erkennen und den programmierbaren elektronischen Leistungssteller aus dem Notbetrieb in einen Normalbetrieb zu überführen, insbesondere durch Deaktivieren der Steuerungstrennstelle und/oder der Leistungsmodultrennstelle.

Vorteilhafter Weise kann die interne Überwachungseinrichtung eine autarke Funktionseinheit des programmierbaren elektronischen Leistungsstellers sein, die unabhängig von dem Steuerungsmodul betreibbar ist. Das heißt mit anderen Worten, dass die interne Überwachungseinheit des Leistungsstellers in dieser Ausführungsform auch dann funktionsfähig ist, wenn weder das Steuerungsmodul noch das Leistungsmodul aktiviert sind. Durch diese Autarkie von den übrigen Funktionseinheiten des Leistungsstellers wird eine zuverlässige Sicherheitsfunktion erreicht. Das interne Überwachungsmodul kann auf diese Weise auch eine Watch-Dog-Funktion übernehmen und das Funktionieren insbesondere der Basissteuerung bspw. durch Abfrage bestimmter Statusdaten quasi-kontinuierlich überprüfen. In Falle eines Ausbleibens der Statusdaten kann das interne Überwachungsmodul einen Neustart des gesamten Steuerungsmoduls im Normalbetrieb oder einen Neustart nur der Basissteuerung im Notbetrieb anstoßen.

Die Erfindung bezieht sich auch auf eine besonders vorteilhafte Verwendung des vorgeschlagenen programmierbaren elektronischen Leistungsstellers zum Ansteuern eines Pitchsystems einer Windkraftanlage, mit dem die Drehstellung eines Rotorblatts oder mehrerer Rotorblätter in der Rotornabe eingestellt wird. Dies stellt eine besonders sicherheitsrelevante Anwendung dar, weil bspw. bei Sturm oder starken Windböen die Rotorblätter der Windkraftanlage in eine Fahnenstellung überführt werden müssen, in der der an die Rotorblätter anströmende Wind nur eine geringe Kraft auf die Rotorblätter überträgt, um im schlimmsten Fall ein Abfallen der Rotorblätter von der Rotornahe der Windkraftanlage zu vermeiden.

Eine vorteilhafte Verwendung ist aber auch in anderen Anwendungsfällen sinnvoll, bspw. zur Sicherung eines unterbrechungsfreien Betriebs von Aktuatoren in kritischen, bspw. chemischen, Produktionsprozessen, bei elektrischen Fahrantrieben oder bei anderen Anwendungen, bei denen ein einfaches Abschalten von Aktuatoren (Notaus) zu besonders gefährlichen Situationen führen kann.

Weitere Vorteile, Merkmale und Anwendungsmöglichkeiten der Erfindung ergeben sich auch aus der nachfolgenden Beschreibung von Ausführungsbeispielen und der Zeichnung. Dabei gehören alle beschriebenen und/oder bildlich dargestellten Merkmale zusammen oder in beliebiger fachmännisch sinnvoller Kombination zum Gegenstand der Erfindung, auch unabhängig von ihrer Zusammenfassung in beschriebenen bzw. dargestellten Ausführungsbeispielen oder in den Ansprüchen.

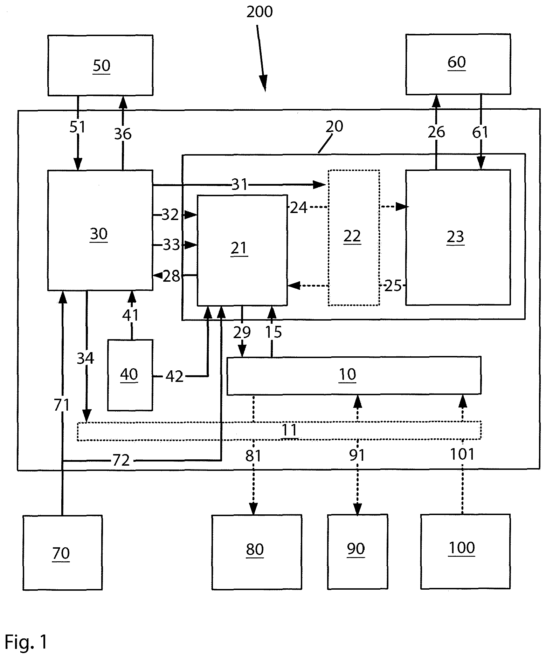

Die einzige Figur 1 zeigt einen programmierbaren elektronischen Leistungssteller 200 in einer schematischen Darstellung dessen funktionaler Komponenten.

Der programmierbare elektronische Leistungssteller 200 umfasst ein Leistungsmodul 10, das zur Energieversorgung über einen Leistungsanschluss 101 mit einer Netzversorgung 100 und/oder über einen Leistungsanschluss 91 - beispielsweise für einen Netzausfall - mit einem Energiespeicher 90 verbunden ist. Über ein Aktuator-Stellsignal 81 steuert das Leistungsmodul 10 einen an den Leistungssteller 200 angeschlossenen Aktuator 80 an.

Das Leistungsmodul 10 wird durch ein Steuerungsmodul 20 über ein Leistungsmodul-Ansteuersignal 29 angesteuert. Zustandsdaten des Leistungsmoduls 10 werden über ein Feedback-Signal 15 an das Steuerungsmodul 20 zurückgemeldet.

Um auch in kritischen Betriebssituationen noch komplexe Fehlerreaktionen durch das Steuerungsmodul 20 zuverlässig abarbeiten und das System definiert in einen sicheren Stillstand überführen zu können, weist der programmierbare elektronische Leistungssteller 200 ein autark arbeitendes internes Überwachungsmodul 30 auf, das dazu eingerichtet ist, einen kritischen Betriebszustand zu erkennen und zu bewerten.

Für die Bewertung erhält das interne Überwachungsmodul 30 Datensignale 41 eines internen Signalgebers 40. Der interne Signalgeber 40 kann insbesondere Sensoren beinhalten, die Zustandswerte, wie bspw. eine Temperatur, in dem Leistungssteller 200 erfassen und als Datensignale 41 an das interne Überwachungsmodul 30 senden.

In ähnlicher Weise sind externe Sensoren eines externen, d.h. außerhalb des Leistungsstellers 200 angeschlossenen, Signalgebers 70 an das interne Überwachungsmodul 30 angeschlossen und senden erfasste Zustandswerte über ein Datensignal 71 an das interne Überwachungsmodul 30.

Ein weiteres Datensignal 51 erhält das interne Überwachungsmodul 30 von einem externen Überwachungsmodul 50, das bspw. äußere Umgebungseinflüsse auf das von dem Aktuator beeinflusste System erfassen und bewerten kann. Zeigen diese äußeren Umgebungseinflüsse einen Zustand an, der für das von dem Aktuator 80 beeinflusste System gefährlich ist, sendet das externe Überwachungsmodul 50 ein Datensignal 51, das als Anforderungssignal zu verstehen ist dafür, dass das interne Überwachungsmodul 30 einen gefährlichen Betriebszustand erkennt.

Die in dem internen Überwachungsmodul 30 eingehenden Datensignale 41, 71, 51 werden softwaretechnisch erfasst und bewertet. Erkennt das interne Überwachungsmodul 30 einen kritischen Betriebszustand, versetzt es das Steuerungsmodul 20 durch Aussenden eines Fehlersignals 31 in einen Notbetrieb.

Der Notbetrieb des Steuerungsmoduls 20 soll, anders als eine reine Notaus-Funktion, noch eine komplexe Fehlerreaktion ausführen und auf den Aktuator 80 über das Leistungsmodul-Ansteuersignal 29 geeignet einwirken, um das System definiert in einen sicheren Stillstand zu überführen. Regeln, wie diese komplexe Fehlerreaktion konkret aussehen soll, sind in das Steuerungsmodul 20 eingebbar, bspw. durch eine geeignete Programmierung bestimmter Verfahrensabläufe.

Weil komplexe Steuerungen mit vielfältigen Funktionen und insbesondere programmierbare Steuerungen anfällig für Softwarefehler bzw. Funktionsstörungen sind, andererseits aber sicherheitsrelevante Funktionen zuverlässig ausgeführt werden müssen, wird erfindungsgemäß eine Aufteilung der Steuerung in dem Steuerungsmodul 20 in eine Basissteuerung 21 und eine Zusatzsteuerung 23 vorgeschlagen.

Die Basissteuerung 21 enthält die für den reduzierten Funktionsumfang des Notbetriebs benötigen Hard- und Softwarekomponenten. Dazu zählt insbesondere der Anschluss für die Ausgabe des Leistungsmodul-Ansteuersignals 29 sowie Anschlüsse für Datensignale 42, 72 von dem internen Signalgeber 40 und dem externen Signalgeber 70. Die von diesen Signalgebern 40, 70 erfassten Sensorwerte werden in der Regel auch bei der Abarbeitung der komplexen Fehlerreaktion benötigt.

Die Zusatzsteuerung 23 enthält zusätzliche, für den Notbetrieb nicht benötigte Funktionen, etwa zur Auswertung von externen Sensoren in einer externen Steuerung 60, zur Generierung von kinematischen Bewegungsprofilen und zur Echtzeit-Kommunikation mit externen Systemen (bspw. die externe Steuerung 60) über (komplexe) Kommunikationsschnittstellen. Die externe Steuerung 60 erhält ein Datensignal 26 mit Betriebsdaten der Steuerung (Empfangen von durch die Zusatzsteuerung 23 gesendeten Betriebsdaten) und sendet ein Datensignal 61 mit externen Steuerungsdaten (Senden von Daten durch die externe Steuerung 60, die von der Zusatzsteuerung 23 empfangen werden).

Weitere Zusatzfunktionen der Zusatzsteuerung 23 ermöglichen beispielsweise die komfortable Diagnose, Parametrierung, Anwenderprogrammierung und Inbetriebnahme des programmierbaren elektronischen Leistungsstellers 200.

Um Störungen bei der Ausführung von Funktionen der Basissteuerung 21 durch die Zusatzsteuerung 23 bspw. aufgrund von Softwarefehlern zu vermeiden, ohne dass die gesamte Software der Zusatzsteuerung einer aufwendigen Sicherheitsüberprüfung unterzogen werden muss, verfügt das Steuerungsmodul 200 über eine Steuerungstrennstelle 22, die in einer Steuerverbindung 24 von der Basissteuerung 21 zu der Zusatzsteuerung 23 und in der Steuerverbindung 25 von der Zusatzsteuerung 23 zu der Basissteuerung 21 angeordnet ist und zum Einrichten eines Notbetriebs durch ein Fehlersignal 31 von dem internen Überwachungsmodul 30 aktivierbar ist. Durch Aktivierung der Steuerungstrennstelle 22 wird ein Zugriff der Zusatzsteuerung 23 auf die Basissteuerung 21 verhindert. Dies kann technisch auf vielfältige Weise realisiert werden, bspw. durch Verhindern eines Speicherzugriffs auf die Basissteuerung 21 durch die Zusatzsteuerung 23, durch Versetzen der Zusatzsteuerung 23 in einen deaktivierten oder ResetZustand (d.h. quasi ein Herunterverfahren der Zusatzsteuerung 23), durch Trennen einer Kommunikationsverbindung zwischen der Basissteuerung 21 und der Zusatzsteuerung 23, die bspw. auf separaten Prozessoren implementiert und über eine Kommunikationsverbindung miteinander verbunden sind, oder dgl. technisch geeignete Maßnahmen.

Dies ist eine sehr effektive Möglichkeit, die Funktionen des Steuerungsmoduls 20 auf die im Notbetrieb benötigten Funktionen zu beschränken und Fehler im Notbetrieb durch komplexe Funktionen der Zusatzsteuerung 23 zu vermeiden.

Das interne Überwachungsmodul 30 kann ferner ein Fehlersignal 32 an die Basissteuerung 21 senden, das in der Basissteuerung 21 einen Neustart der Basissteuerung 21 im Notbetrieb und vorzugsweise gleichzeitiger Deaktivierung der Zusatzsteuerung auslöst (Neustart-Fehlersignal). Technisch kann dies bspw. durch einen schnellen Shut-Down des gesamten Steuerungsmoduls 20 mit Basissteuerung 21 und Zusatzsteuerung 23 und einen selektiven Neustart der Basissteuerung 21 realisiert werden. Zusätzlich kann das interne Überwachungsmodul 30, ggf. auch vorab, ein Fehlersignal 33 zur Vorankündigung eines Notbetriebs (Vorwarn-Fehlersignal). Dies ermöglicht der Basissteuerung 21 das Vorbereiten des Notbetriebs.

Es kann auch vorgesehen sein, dass die Basissteuerung 21, bspw. wenn diese einen instabilen Zustand der Zusatzsteuerung 23 und/oder der Basissteuerung 21 feststellt, ein Datensignal 28 mit dieser Information zur Auswertung an das interne Überwachungsmodul 30 übersendet, das diese Information bewertet und dann ggf. einen Notbetrieb in der beschriebenen Weise einleitet.

Je nach Art des durch das interne Überwachungsmodul 30 festgestellten Betriebsstands kann statt einer komplexen Fehlerreaktion zur kontrollierten Stilllegung des Aktuators 80 auch ein sofortiger Notaus des Aktuators 80 oder des gesamten Systems geboten sein. Dies kann das interne Überwachungsmodul 30 in einer bevorzugten Ausführung ohne Beteiligung der Basissteuerung 21 mittels eines Fehlersignal 34 an eine Leistungsmodultrennstelle 11 erreichen, die dazu eingerichtet ist, bei einer Aktivierung durch das Fehlersignal 34 selektiv bestimmte oder alle Leistungseingänge von einer Energieversorgung (Netzversorgung 100, Energiespeicher 90) sowie selektive bestimmte oder alle Leistungsausgänge an einen oder mehrere Aktuatoren 80 (in der Figur ist zur Vereinfachung nur ein Aktuator dargestellt) zu trennen. Hierdurch wird eine klassische Notaus-Funktion realisiert.

Im Falle der Einleitung eines Notbetriebs und/oder zur Vorwarnung kann das interne Überwachungsmodul 30 ein Fehlersignal 36 auch an das externe Überwachungsmodul 50 senden, das bspw. ein Leitstand oder mit einem Leitstand verbunden sein kann.

### Bezugszeichenliste:

- 10: Leistungsmodul
- 11: Leistungsmodultrennstelle
- 15: Feedback-Signal
- 20: Steuerungsmodul
- 21: Basissteuerung
- 22: Steuerungstrennstelle
- 23: Zusatzsteuerung
- 24: Steuerverbindung von der Basissteuerung zur Zusatzsteuerung
- 25: Steuerverbindung von der Zusatzsteuerung zur Basissteuerung
- 26: Datensignal mit Betriebsdaten
- 28: Datensignal mit Betriebsdaten
- 29: Leistungsmodul-Ansteuersignal
- 30: internes Überwachungsmodul
- 31: Fehlersignal an die Steuerungstrennstelle
- 32: Fehlersignal an die Basissteuerung zum Neustart (Neustart-Fehlersignal)
- 33: Fehlersignal an die Basissteuerung zur Vorankündigung (Vorwarn-Fehlersignal)
- 34: Fehlersignal an die Leistungsmodultrennstelle
- 36: Fehlersignal an das externe Überwachungsmodul
- 40: interner Signalgeber
- 41: Datensignal
- 42: Datensignal
- 50: externes Überwachungsmodul
- 51: Datensignal
- 60: externe Steuerungseinheit
- 61: Datensignal mit externen Steuerungsdaten
- 70: externer Signalgeber
- 71: Datensignal
- 72: Datensignal
- 80: elektromechanischer Aktuator
- 81: Aktuator-Stellsignal
- 90: Energiespeicher
- 91: Leistungsanschluss
- 100: Netzversorgung
- 101: Leitungsanschluss
- 200: programmierbarer elektronischer Leistungssteller

## Patentansprüche

1. Programmierbarer elektronischer Leistungssteller mit einem Leistungsmodul (10) zum Ansteuern mindestens eines an das Leistungsmodul (10) anschließbaren Aktuators (80) mittels eines Aktuator-Stellsignals (81), mit einem Steuerungsmodul (20) zum Betätigen des Leistungsmoduls (10) mittels eines Leistungsmodul-Ansteuersignals (29) und mit einem internen Überwachungsmodul (30) zum Überführen des Steuerungsmoduls (20) in einen Notbetrieb, in welchem das Steuerungsmodul (20) dazu eingerichtet ist, eine vordefinierte Fehlerreaktion auszuführen und den Aktuator (80) in einen sicheren Zustand zu versetzen, wobei das interne Überwachungsmodul (30) dazu eingerichtet ist, einen Systemzustand zu überwachen, einen kritischen Betriebszustand zu erkennen und mindestens ein Fehlersignal (31, 32, 33, 34, 36) auszugeben, **dadurch gekennzeichnet, dass** das Steuerungsmodul (20) umfasst
• eine Basissteuerung (21), die dazu eingerichtet ist, die Leistungsmodul-Ansteuersignale (29) auszugeben, und in der die Funktionen zur Steuerung und Regelung des Aktuators (80) implementiert sind, die für einen Notbetrieb in einem kritischen Betriebszustand notwendig sind,
• eine Zusatzsteuerung (23), in der für den Notbetrieb in einem kritischen Betriebszustand nicht benötigte Funktionen implementiert sind, und
• eine Steuerungstrennstelle (22), welche die Basissteuerung (21) mit der Zusatzsteuerung (23) über eine Steuerverbindung (24, 25) verbindet und dazu eingerichtet ist, das Fehlersignal (31) von dem internen Überwachungsmodul (30) zu erhalten und nach dessen Erhalt die Steuerverbindung (24, 25) zumindest teilweise zu trennen,
wobei das Überwachungsmodul (30) dazu eingerichtet, im Notbetrieb eine funktionale Trennung der Basissteuerung (21) von der Zusatzsteuerung (23) vorzunehmen, so dass eine externe Beeinflussung der Basissteuerung (21) durch die Zusatzsteuerung (23) ausgeschlossen werden kann.

2. Programmierbarer elektronischer Leistungssteller nach Anspruch 1, **dadurch gekennzeichnet, dass** die Steuerungstrennstelle (22) als Speicherschutzeinrichtung realisiert ist, welche dazu eingerichtet ist, festgelegte Speicherbereiche der Basissteuerung (21) vor einer Beeinflussung durch die Zusatzsteuerung (23) zu schützen.

3. Programmierbarer elektronischer Leistungssteller nach Anspruch 1 oder 2, **dadurch gekennzeichnet, dass** die Steuerungstrennstelle (22) dazu eingerichtet ist, bei Erhalt des Fehlersignals (31) von dem internen Überwachungsmodul (30) die Zusatzsteuerung (23) in einen Resetzustand zu versetzen und in dem Resetzustand zu halten, bis der Notbetrieb beendet wird.

4. Programmierbarer elektronischer Leistungssteller nach einem der Ansprüche 1 bis 3, **dadurch gekennzeichnet, dass** das Steuerungsmodul (20) mehrere Prozessoren aufweist, wobei die Basissteuerung (21) und die Zusatzsteuerung (23) auf jeweils mindestens einem unterschiedlichen Prozessor implementiert sind, oder einen Multi-Kern-Prozessor aufweist, wobei die Basissteuerung (21) und die Zusatzsteuerung (23) auf jeweils mindestens einem unterschiedlichen Kern des Multi-Kern-Prozessors implementiert sind.

5. Programmierbarer elektronischer Leistungssteller nach einem der vorhergehenden Ansprüche, **dadurch gekennzeichnet, dass** das Leistungsmodul (10) eine Leistungsmodultrennstelle (11) aufweist, welche zwischen dem Leistungsmodul (10) und einem Anschluss an den Aktuator (80) angeordnet ist und dazu eingerichtet ist, das Fehlersignal (34) von dem internen Überwachungsmodul (30) zu erhalten und nach dessen Erhalt das Aktuator-Stellsignal (81) nicht an den Anschluss an den Aktuator (80) weiterzuleiten.

6. Programmierbarer elektronischer Leistungssteller nach einem der vorhergehenden Ansprüche, **dadurch gekennzeichnet, dass** an das interne Überwachungsmodul (30) ein interner Signalgeber (40), ein externer Signalgeber (70) und/oder ein externes Überwachungsmodul (50) angeschlossen sind, wobei der interne Signalgeber (40), der externe Signalgeber (70) und/oder das externe Überwachungsmodul (50) dazu eingerichtet sind, Datensignale (41, 51, 71) an das interne Überwachungsmodul (30) zu senden.

7. Programmierbarer elektronischer Leistungssteller nach Anspruch 6, **dadurch gekennzeichnet, dass** das externe Überwachungsmodul (50) ein internes Überwachungsmodul (30) eines anderen programmierbaren elektrischen Leistungsstellers (200) ist.

8. Programmierbarer elektronischer Leistungssteller nach einem der vorhergehenden Ansprüche, **dadurch gekennzeichnet, dass** die Basissteuerung (21) an das interne Überwachungsmodul (30) angeschlossen ist und dazu eingerichtet ist, Datensignale (28) an das interne Überwachungsmodul (30) zu senden.

9. Programmierbarer elektronischer Leistungssteller einem der Ansprüche 6 bis 8, **dadurch gekennzeichnet, dass** das interne Überwachungsmodul (30) dazu eingerichtet ist, die empfangenen Datensignale (28, 41, 51, 71) zu bewerten und bei Erkennen einer kritischen Betriebssituation ein Fehlersignal (31, 32, 33, 34, 36) oder mehrere Fehlersignale (31, 32, 33, 34, 36) auszusenden.

10. Programmierbarer elektronischer Leistungssteller nach einem der Ansprüche 7 oder 8, **dadurch gekennzeichnet, dass** das interne Überwachungsmodul (30) dazu eingerichtet ist, ein Fehlersignal (32) an die Basissteuerung (21) auszusenden, wobei die Basissteuerung (21) dazu eingerichtet ist, bei Erhalt dieses Fehlersignals (32) einen Neustart der Basissteuerung (21) auszulösen.

11. Programmierbarer elektronischer Leistungssteller nach einem der Ansprüche 7 bis 9, **dadurch gekennzeichnet, dass** das interne Überwachungsmodul (30) dazu eingerichtet ist, ein Fehlersignal (33) an die Basissteuerung (21) auszusenden, wobei die Basissteuerung (21) dazu eingerichtet ist, bei Erhalt dieses Fehlersignals (33) einen Notbetrieb vorzubereiten.

12. Programmierbarer elektronischer Leistungssteller nach einem der vorhergehenden Ansprüche, **dadurch gekennzeichnet, dass** ausschließlich die Basissteuerung (21) dazu eingerichtet ist, Leistungsmodul-Ansteuersignale (29) an das Leistungsmodul (10) auszugeben.

13. Programmierbarer elektronischer Leistungssteller nach einem der vorhergehenden Ansprüche, **dadurch gekennzeichnet, dass** die interne Überwachungseinrichtung (30) dazu eingerichtet ist, das Ende eines Notbetriebs zu erkennen und den programmierbaren elektronischen Leistungssteller (200) aus dem Notbetrieb in einen Normalbetrieb zu überführen.

14. Programmierbarer elektronischer Leistungssteller nach einem der vorhergehenden Ansprüche, **dadurch gekennzeichnet, dass** die interne Überwachungseinrichtung (30) eine autarke Funktionseinheit des programmierbaren elektronischen Leistungsstellers (200) ist, die unabhängig von dem Steuerungsmodul (20) betreibbar ist.

15. Verwendung eines programmierbaren elektronischen Leistungsstellers (200) nach einem der Ansprüche 1 bis 14, **dadurch gekennzeichnet, dass** der Leistungssteller (200) zum Ansteuern eines Pitchsystems einer Windkraftanlage verwendet wird, mit dem die Drehstellung mindestens eines Rotorblatts an einer Rotornabe eingestellt wird.

## Claims

1. Programmable electronic power controller with a power module (10) for controlling at least one actuator (80) that can be connected to the power module (10) by means of an actuator control signal (81), with a control module (20) for operating the power module (10) by means of a power module control signal (29), and with an internal monitoring module (30) for switching the control module (20) to emergency operation, in which the control module (20) is configured to execute a predefined fault response and place the actuator (80) in a safe state, wherein the internal monitoring module (30) is configured to monitor a system state, to detect a critical operating state and output at least one error signal (31, 32, 33, 34, 36), **characterized in that** the control module (20) comprises
- a base controller (21) which is configured to output the power module control signals (29), and in which the functions for open- and closed-loop control of the actuator (80) necessary for emergency operation in a critical operating state are implemented,
- an additional controller (23), in which functions that are not necessary for emergency operation in a critical operating state are implemented, and
- a controller separation point (22), which connects the base controller (21) to the additional controller (23) via a controller connection (24, 25) and is configured to receive the error signal (31) from the internal monitoring module (30) and upon receipt thereof at least partly separate the controller connection (24, 25),
wherein the monitoring module (30) is configured to perform a functional separation of the base controller (21) from the additional controller (23) in emergency operation, so that an external influence on the base controller (21) by the additional controller (23) can be prevented.

2. Programmable electronic power controller according to Claim 1, **characterized in that** the controller separation point (22) is embodied as a memory protection device which is configured to protect defined memory areas of the base controller (21) from and influence by the additional controller (23).

3. Programmable electronic power controller according to Claim 1 or 2, **characterized in that** the controller separation point (22) is configured to place the additional controller (23) in a reset state upon receipt of an error signal (31) from the internal monitoring module (30) and to keep it in the reset state until the emergency operation is ended.

4. Programmable electronic power controller according to any one of Claims 1 to 3, **characterized in that** the control module (20) has multiple processors, wherein the base controller (21) and the additional controller (23) are each implemented on at least one different processor, or has a multi-core processor, wherein the base controller (21) and the additional controller (23) are each implemented on at least different core of the multi-core processor.

5. Programmable electronic power controller according to any one of the preceding claims, **characterized in that** the power module (10) has a power module separation point (11) which is arranged between the power module (10) and a connector to the actuator (80) and is configured to receive the error signal (34) from the internal monitoring module (30), and after receiving said signal not to forward the actuator control signal (81) to the connector to the actuator (80).

6. Programmable electronic power controller according to any one of the preceding claims, **characterized in that** an internal signal transmitter (40), an external signal transmitter (70) and/or an external monitoring module (50) are connected to the internal monitoring module (30), wherein the internal signal transmitter (40), the external signal transmitter (70) and/or the external monitoring module (50) are configured to send data signals (41, 51, 71) to the internal monitoring module (30) .

7. Programmable electronic power controller according to Claim 6, **characterized in that** the external monitoring module (50) is an internal monitoring module (30) of another programmable electrical power controller (200).

8. Programmable electronic power controller according to any one of the preceding claims, **characterized in that** the base controller (21) is connected to the internal monitoring module (30) and is configured to send data signals (28) to the internal monitoring module (30).

9. Programmable electronic power controller according to any one of Claims 6 to 8, **characterized in that** the internal monitoring module (30) is configured to evaluate the received data signals (28, 41, 51, 71) and, when a critical operating situation is detected, to transmit an error signal (31, 32, 33, 34, 36) or multiple error signals (31, 32, 33, 34, 36).

10. Programmable electronic power controller according to either of Claims 7 or 8, **characterized in that** the internal monitoring module (30) is configured to transmit an error signal (32) to the base controller (21), wherein the base controller (21) is configured to initiate a restart of the base controller (21) when this error signal (32) is received.

11. Programmable electronic power controller according to any one of Claims 7 to 9, **characterized in that** the internal monitoring module (30) is configured to transmit an error signal (33) to the base controller (21), wherein the base controller (21) is configured to prepare emergency operation when this error signal (33) is received.

12. Programmable electronic power controller according to any one of the preceding claims, **characterized in that** only the base controller (21) is configured to transmit power module control signals (29) to the power module (10) .

13. Programmable electronic power controller according to any one of the preceding claims, **characterized in that** the internal monitoring device (30) is configured to detect the end of an emergency operation and to switch the programmable electronic power controller (200) from emergency operation to normal operation.

14. Programmable electronic power controller according to any one of the preceding claims, **characterized in that** the internal monitoring device (30) is an autarchic functional unit of the programmable electronic power controller (200) which can be operated independently of the control module (20).

15. Use of a programmable electronic power controller (200) according to any one of Claims 1 to 14, **characterized in that** the power controller (200) is used to control a pitch system of a wind turbine, with which the rotational position of at least one rotor blade is set on a rotor hub.

## Revendications

1. Module de puissance électronique programmable avec un module de puissance (10) pour commander au moins un actionneur (80) raccordable au module de puissance (10) au moyen d'un signal de réglage d'actionneur (81), avec un module de commande (20) pour actionner le module de puissance (10) au moyen d'un signal d'activation de module de commande (29) et avec un module de contrôle interne (30) pour transférer le module de commande (20) dans un fonctionnement de secours dans lequel le module de commande (20) est agencé pour exécuter une réaction de défaut prédéfinie et déplacer l'actionneur (80) dans un état sécurisé, sachant que le module de contrôle interne (30) est agencé pour surveiller un état de système, pour identifier un état de fonctionnement critique et envoyer au moins un signal de défaut (31, 32, 33, 34, 36), **caractérisé en ce que** le module de commande (20) comprend
- une commande de base (21), qui est agencée pour envoyer les signaux d'activation de module de puissance (29) et dans laquelle les fonctions sont mises en œuvre pour commander et régler l'actionneur (80), qui sont nécessaires pour un fonctionnement de secours dans un état de fonctionnement critique,
- une commande supplémentaire (23) dans laquelle des fonctions non nécessaires sont mises en œuvre pour le fonctionnement de secours dans un état de fonctionnement critique, et
- un point de sectionnement de commande (22), lequel relie la commande de base (21) à la commande supplémentaire (23) par le biais d'une liaison de commande (24, 25) et est agencé pour recevoir le signal de défaut (31) du module de contrôle interne (30) et séparer au moins en partie la liaison de commande (24, 25) après réception de celui-ci,
sachant que le module de contrôle (30) est agencé pour procéder en fonctionnement de secours à une séparation fonctionnelle de la commande de base (21) de la commande supplémentaire (23) de telle manière qu'une influence externe de la commande de base (21) par la commande supplémentaire (23) puisse être exclue.

2. Module de puissance électronique programmable selon la revendication 1, **caractérisé en ce que** le point de sectionnement de commande (22) est réalisé sous la forme d'un dispositif de protection de mémoire, lequel est agencé pour protéger les zones de mémoire établies de la commande de base (21) avant une influence par la commande supplémentaire (23).

3. Module de puissance électronique programmable selon la revendication 1 ou 2, **caractérisé en ce que** le point de sectionnement de commande (22) est agencé pour déplacer la commande supplémentaire (23) dans un état de réinitialisation lors de la réception du signal de défaut (31) venant du module de contrôle interne (30) et maintenir dans l'état de réinitialisation jusqu'à ce que le fonctionnement de secours soit terminé.

4. Module de puissance électronique programmable selon l'une quelconque des revendications 1 à 3, **caractérisé en ce que** le module de commande (20) comporte plusieurs processeurs, sachant que la commande de base (21) et la commande supplémentaire (23) sont mises en œuvre au moins respectivement sur un processeur différent ou comporte un processeur à noyaux multiples, sachant que la commande de base (21) et la commande supplémentaire (23) sont mises en œuvre au moins respectivement sur un noyau différent du processeur à noyaux multiples.

5. Module de puissance électronique programmable selon l'une quelconque des revendications précédentes, **caractérisé en ce que** le module de puissance (10) comporte un point de sectionnement de puissance (11), lequel est disposé entre le module de puissance (10) et un raccordement à l'actionneur (80) et est agencé pour recevoir le signal de défaut (34) du module de contrôle interne (30) et retransmettre après réception de celui-ci le signal de réglage d'actionneur (81) à l'actionneur (80) et pas au raccordement.

6. Module de puissance électronique programmable selon l'une quelconque des revendications précédentes, **caractérisé en ce qu'**un générateur de signaux interne (40), un générateur de signaux externe (70) et/ou un module de contrôle externe (50) sont raccordés au module de contrôle interne (30), sachant que le générateur de signaux interne (40), le générateur de signaux externe (70) et/ou le module de contrôle externe (50) sont agencés pour envoyer des signaux de données (41, 51, 71) au module de contrôle interne (30).

7. Module de puissance électronique programmable selon la revendication 6, **caractérisé en ce que** le module de contrôle externe (50) est un module de contrôle interne (30) d'un autre module de puissance électrique programmable (200).

8. Module de puissance électronique programmable selon l'une quelconque des revendications précédentes, **caractérisé en ce que** la commande de base (21) est raccordée au module de contrôle interne (30) et est agencée pour envoyer des signaux de données (28) au module de contrôle interne (30).

9. Module de puissance électronique programmable selon l'une quelconque des revendications 6 à 8, **caractérisé en ce que** le module de contrôle interne (30) est agencé pour exploiter les signaux de données (28, 41, 51, 71) reçus et envoyer un signal de défaut (31, 32, 33, 34, 36) ou plusieurs signaux de défaut (31, 32, 33, 34, 36) en cas d'identification d'une situation de fonctionnement critique.

10. Module de puissance électronique programmable selon l'une quelconque des revendications 7 ou 8, **caractérisé en ce que** le module de contrôle interne (30) est agencé pour envoyer un signal de défaut (32) à la commande de base (21), sachant que la commande de base (21) est agencée pour déclencher une nouvelle mise en marche de la commande de base (21) lors de la réception de ce signal de défaut (32).

11. Module de puissance électronique programmable selon l'une quelconque des revendications 7 à 9, **caractérisé en ce que** le module de contrôle interne (30) est agencé pour envoyer un signal de défaut (33) à la commande de base (21), sachant que la commande de base (21) est agencée pour préparer un fonctionnement de secours en cas de réception de ce signal de défaut (33).

12. Module de puissance électronique programmable selon l'une quelconque des revendications précédentes, **caractérisé en ce que** seule la commande de base (21) est agencée pour envoyer un signal d'activation de module de puissance (29) au module de puissance (10).

13. Module de puissance électronique programmable selon l'une quelconque des revendications précédentes, **caractérisé en ce que** le dispositif de contrôle interne (30) est agencé pour identifier la fin d'un fonctionnement de secours et pour transférer le module de puissance électronique programmable (200) du fonctionnement de secours dans un fonctionnement normal.

14. Module de puissance électronique programmable selon l'une quelconque des revendications précédentes, **caractérisé en ce que** le dispositif de contrôle interne (30) est une unité fonctionnelle autonome du module de puissance électronique programmable (200) qui peut être activée indépendamment du module de commande (20).

15. Utilisation d'un module de puissance électronique programmable (200) selon l'une quelconque des revendications 1 à 14, **caractérisée en ce que** le module de puissance (200) est utilisé pour commander un système de pas d'une installation éolienne avec lequel la position de rotation d'au moins une pale de rotor est réglée sur un moyeu de rotor.
